# EUROPEAN PATENT SPECIFICATION

(11) **EP 3 156 767 B1**
(45) Date of publication and mention of the grant of the patent: **04.11.2020**
(21) Application number: 16188955.5
(22) Date of filing: 15.09.2016
(51) Int. Cl.: G01C 21/36

(54) **METHOD AND DEVICE FOR NAVIGATING AND METHOD AND DEVICE FOR GENERATING A NAVIGATION VIDEO**
VERFAHREN UND VORRICHTUNG ZUR NAVIGATION UND VERFAHREN UND VORRICHTUNG ZUR ERZEUGUNG EINES NAVIGATIONSVIDEOS
PROCÉDÉ ET DISPOSITIF DE NAVIGATION ET PROCÉDÉ ET DISPOSITIF POUR GÉNÉRER UNE VIDÉO DE NAVIGATION

(30) Priority: 22.09.2015 CN 201510609516
(43) Date of publication of application: 19.04.2017
(73) Proprietor: Xiaomi Inc., Beijing 100085 (CN)
(72) Inventor: LIU, Guoming, Haidian District Beijing 100085 (CN); XIE, Long, Haidian District Beijing 100085 (CN); ZHENG, Zhiguang, Haidian District Beijing 100085 (CN)
(74) Representative: Robson, Aidan John

(56) References cited:
- WO-A1-99/39160
- DE-A1- 10 151 354
- DE-A1-102006 056 874
- US-A1- 2009 254 265
- US-A1- 2014 032 099

## Description

### FIELD

The present disclosure generally relates to the field of wireless communication technology, and more particularly to a method and device for navigating and a method and device for generating a navigation video.

### BACKGROUND

Currently, all the navigation systems are based on maps, the user need to identify the abstract maps and simplify identification during driving. Since some users aware of the maps slowly inborn, they are easily missed in complicated built environment or multi-intersections environment. DE102006056874 A1, DE10151354 A1, WO9939160 A1, US2009254265 A1 and US2014032099 A1 all disclose navigation systems showing navigation videos.

### SUMMARY

Embodiments of the present disclosure provide a method and device for navigation and generating a navigation video. The technical solutions are as follows.

According to a first aspect of the present disclosure, a method for navigating is provided according to claim 1.

Alternatively, the navigation request information includes navigation parameters of a navigation starting point and a navigation ending point, the processing of determining the navigation video matching with the navigation request information includes: obtaining the navigation starting point and navigation ending point of the navigation video; determining a navigation video, both the navigation starting point and the navigation ending point of which are the same as those of the navigation request information as the navigation video matching with the navigation starting point and the navigation ending point.

The navigation request information includes navigation parameters of a navigation starting point and a navigation ending point, the processing of determining the navigation video matching with the navigation request information includes: calculating a navigation route based on the navigation starting point and the navigation ending point; querying for a navigation video comprising the navigation route; cutting out a navigation video corresponding to the navigation route from the navigation video comprising the navigation route, and determining the navigation video corresponding to the navigation route as the navigation video matching with the navigation starting point and the navigation ending point.

Alternatively, the navigation request information includes navigation parameters of a navigation starting point and a navigation ending point, the processing of determining the navigation video matching with the navigation request information includes: calculating a navigation route based on the navigation starting point and the navigation ending point; dividing the navigation route into at least two navigation sub-routes; inquiring the navigation videos corresponding to the navigation sub-routes respectively; splicing the navigation videos corresponding to the navigation sub-routes to obtain the navigation video matching with the navigation starting point and the navigation ending point.

The navigation request information further includes at least one of the following navigation parameters: a region name, a road name, a season, weather, an average driving speed, and a driving distance; in case that at least two navigation videos matching with the navigation starting point and the navigation ending point are obtained by querying, the processing of determining a navigation video matching with the navigation request information includes: obtaining the navigation parameters of the navigation videos; calculating matching degrees of the navigation parameters of the navigation request information with respect to the navigation parameters of the navigation videos; determining a navigation video whose matching degree is the largest as the navigation video matching with the navigation request information, or determining navigation videos whose matching degrees are larger than a preset threshold as navigation videos matching with the navigation request information, or determining a predetermined number of navigation videos whose matching degrees are relatively high as navigation videos matching with the navigation request information.

Alternatively, navigating according to the navigation video when the method is applied to a network, including: sending the navigation video to a terminal, for playing.

Alternatively, navigating according to the navigation video when the method is applied to a terminal, including: playing the navigation video.

Alternatively, wherein when at least two navigation videos matching with the navigation request information are determined, the processing of navigating based on the navigation video includes: arranging and displaying the navigation videos matching with the navigation request information; receiving an operation for selecting one of the navigation videos from a user; playing the navigation video.

Alternatively, the processing of navigating based on the navigation video includes: obtaining a present driving speed; determining a playing speed of the navigation video based on the present driving speed; playing the navigation video at the playing speed.

Alternatively, when the method is applied to terminal, including: synchronizing navigation data from the a network, wherein the navigation data include the navigation video; storing the navigation data in a local navigation database; the processing of determining the navigation video matching with the navigation request information includes: querying for the navigation video matching with the navigation request information from the local navigation database.

According to a non-claimed example a method for generating a navigation video is provided, including: obtaining navigation parameters entered by a user, wherein the navigation parameters comprise a navigation starting point and a navigation ending point; location shooting a road to obtain a shot video, wherein the shooting is stopped when the navigation ending point is reached; associating the navigation parameters with the shot video to obtain the navigation video; uploading the navigation video to a network.

Alternatively, the method further includes: recording driving speed; calculating an average driving speed based on the driving speed; the processing of associating the navigation parameters with the shooting video includes: taking the average driving speed as a navigation parameter to associate it with the shot video.

According to a second aspect of embodiments of the present disclosure, a device for navigating is provided according to claim 5.

Alternatively, the navigation request information includes navigation parameters of a navigation starting point and a navigation ending point, the determining module includes: a first obtaining sub-module configured to obtain navigation starting points and navigation ending points of navigation videos; a determining sub-module configured to determine a navigation video, both the navigation starting point and the navigation ending point of which are the same as those of the navigation request information as the navigation video matching with the navigation starting point and the navigation ending point.

The navigation request information includes navigation parameters of a navigation starting point and a navigation ending point, the determining module includes: a first computing sub-module configured to calculate a navigation route based on the navigation starting point and the navigation ending point; a querying sub-module configured to query for a navigation video comprising the navigation route; a cutting-out sub-module configured to cut out a navigation video corresponding to the navigation route from the navigation video comprising the navigation route, and determining the navigation video corresponding to the navigation route as the navigation video matching with the navigation starting point and the navigation ending point.

Alternatively, the navigation request information includes navigation parameters of a navigation starting point and a navigation ending point, the determining module includes: a first computing sub-module configured to calculate a navigation route based on the navigation starting point and the navigation ending point; a dividing sub-module configured to divide the navigation route into at least two navigation sub-routes; an inquiring sub-module configured to query for navigation videos corresponding to the navigation sub-routes respectively; a splicing sub-module configured to splice the navigation videos corresponding to the navigation sub-routes to obtain the navigation video matching with the navigation starting point and the navigation ending point.

Alternatively, wherein the navigation request information further comprises at least one of the following navigation parameters: a regional name, a road name, a season, weather, an average driving speed, and a driving distance; and the determining module includes: a second obtaining sub-module configured to, in case that at least two navigation videos matching with the navigation starting point and the navigation ending point are obtained by querying; configured to calculate matching degrees of the navigation parameters of the navigation request information with respect to the navigation parameters of the navigation videos; wherein the determining sub-module for determining a navigation video whose matching degree is the largest as the navigation video matching with the navigation request information, or determining navigation videos whose matching degrees are larger than a preset threshold as navigation videos matching with the navigation request information, or determining a predetermined number of navigation videos whose matching degrees are relatively high as navigation videos matching with the navigation request information.

Alternatively, the navigating module is configured to send the navigation video to a terminal for playing when the device is applied to a network.

Alternatively, the navigating module is configured to play the navigation video when the device is applied to a terminal.

Alternatively, the navigating module includes: a displaying sub-module configured to, when at least two navigation videos matching with the navigation request information are determined, arrange and display the navigation videos matching with the navigation request information; a receiving sub-module configured to receive an operation for selecting one of the navigation videos from a user; a playing sub-module configured to play the selected navigation video.

Alternatively, the navigation module includes: an obtaining sub-module configured to obtain a present driving speed; a determining sub-module configured to determine a playing speed of the navigation video based on the present driving speed; a playing sub-module configured to play the navigation video at the playing speed.

Alternatively, the device further includes: a synchronizing module configured to synchronize navigation data from a network when the device is applied to a terminal, wherein the navigation data comprises the navigation video; a storing module configured to store the navigation data in a local navigation database; wherein the determining module is configured to query for the navigation video matching with the navigation request information from the local navigation database.

According to a non-claimed example, device for generating a navigation video is provided, including: an obtaining module configured to obtain navigation parameters entered by a user, wherein the navigation parameters comprise a navigation starting point and a navigation ending point; a shooting module configured to location shoot a road to obtain a shot video, wherein the shooting is stopped when the navigation ending point is reached; an associating module configured to associate the navigation parameters with the shot video to obtain the navigation video; an uploading module configured to upload the navigation video to a network.

Alternatively, the device further includes: a recording module configured to record driving speeds; a computing module configured to calculate an average driving speed based on the driving speeds; wherein the associating module is configured to take the average driving speed as a navigation parameter to associate it with the shot video.

According to a non-claimed example, device for navigating is provided, including: a processor; a memory for storing instructions executable by the processor; wherein the processor is configured to: obtain navigation request information; determine a navigation video matching with the navigation request information, wherein the navigation video is a video obtained from location shooting of a road; navigate based on the navigation video.

According to a non-claimed example, device for generating a navigation video is provided, including: a processor; a memory for storing instructions executable by the processor; wherein the processor is configured to: obtain navigation parameters entered by a user, wherein the navigation parameters comprise a navigation starting point and a navigation ending point; location shoot a road to obtain a shot video, wherein the shooting is stopped when the navigation ending point is reached; associate the navigation parameters with the shot video to obtain the navigation video; upload the navigation video to a network.

Embodiments of the disclosure may provide at least some of the following beneficial effects: in the navigating technical solution above, navigating with the real video, it will reduce the reaction time for maps and various simplify identification for the user during driving, and with more sensitive for the road conditions and directions, it will navigate for the user more directly to avoid missing in complicated built environment or multi-intersections environment, so that improve the accuracy for navigation and also improve the user experience.

In an exemplary embodiment, querying the corresponding navigation video according the navigation starting point and the navigation ending point of the navigation request information that can compare it with the navigation starting point and the navigation ending point of the navigation video directly, so it will get the navigation video which the user want query accurately.

In an exemplary embodiment, if the starting point which queried is close to the ending point, it may have no navigation video entirely matching the user requirement, but there may be the navigation videos which include the navigation route, it can cut out the navigation video which is corresponding to the queried route from these navigation video. So it will match the navigation video that is needed accurately for the user to improve the accuracy for navigation.

In an exemplary embodiment, by splicing the navigation video which needed for the user, it will match the navigation video that is needed accurately for the user to improve the accuracy for navigation.

In an exemplary embodiment, by filtering the queried navigation videos with the parameters, it will provide more accurate navigation video whose matching degree is the largest which needed for the user to improve the accuracy for navigation and the user experience.

In an exemplary embodiment, if the operation of matching the navigation video based on the navigation request information is finished by the server on the network, the server need to push the navigation video which has been matched to the terminal which used to request. So it can store the navigation video data without plenty of storage space but consume certain data traffic.

In an exemplary embodiment, if the operation of matching the navigation video based on the navigation request information is finished by the terminal, the terminal prc-storc a lot of navigation video data, it will consume the storage space of the terminal but save the data traffic of the terminal, since the querying is finished in local, the speed of processing is quicker.

In an exemplary embodiment, the queried navigation videos are displayed for the user, and the user select to use which of the navigation videos, to enable the more intelligent navigation and the better user experience.

In an exemplary embodiment, adjusting the playing speed of the navigation video based on the present driving speed during driving, so the playing speed is matched with the present driving speed. The picture that the user has viewed is the picture of the present road, it enable the more accurate effects of the navigation and the better user experience.

In an exemplary embodiment, it can synchronize the navigation data from the network in advance, so when navigating in real-time, it will not have to consume the data traffic anymore. The processing of synchronizing the navigation data from the network may be periodic, for example, synchronizing per week.

In the technical solution of generating a navigation video above, the terminal is used to local shoot for the live-action, associate the navigation parameters to generate navigation video and send it to the server on network. So when the other user is driving on the same road, this navigation video can be used to navigate, it will reduce the reaction time for maps and various simplify identification for the user during driving, and it will more sensitive for the road conditions and directions, so that improve the accuracy for navigation and also improve the user experience.

In an exemplary embodiment, it can increase the average driving speed in navigation parameters, so when matching the navigation video in subsequent, the accuracy of matching is higher, so that the accuracy for navigation is improved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for navigating according to an exemplary embodiment.
Fig. 2 is a flow diagram illustrating a method for navigating according to another exemplary embodiment.
Fig. 3 is a flow diagram illustrating a method for navigating according to another exemplary embodiment.
Fig. 4 is a flow diagram illustrating a method for navigating according to another exemplary embodiment.
Fig. 5 is a flow diagram illustrating a method for navigating according to another exemplary embodiment.
Fig. 6 is a flow diagram illustrating a method for navigating according to another exemplary embodiment.
Fig. 7 is a flow diagram illustrating a method for navigating according to another exemplary embodiment.
Fig. 8 is a flow diagram illustrating a method for navigating according to another exemplary embodiment.
Fig. 9 is a flow diagram illustrating a method for navigating according to another exemplary embodiment.
Fig. 10 is a flow diagram illustrating a method for generating a navigation video according to an exemplary embodiment.
Fig. 11 is a block diagram illustrating a device for navigating according to an exemplary embodiment.
Fig. 12 is a block diagram illustrating a determining module according to an exemplary embodiment.
Fig. 13 is a block diagram illustrating a determining module according to another exemplary embodiment.
Fig. 14 is a block diagram illustrating a determining module according to another exemplary embodiment.
Fig. 15 is a block diagram illustrating a determining module according to another exemplary embodiment.
Fig. 16 is a block diagram illustrating a navigating module according to an exemplary embodiment.
Fig. 17 is a block diagram illustrating a navigating module according to an exemplary embodiment.
Fig. 18 is a block diagram illustrating a device for navigating according to another exemplary embodiment.
Fig. 19 is a block diagram illustrating a device for generating a navigation video according to an exemplary embodiment.
Fig. 20 is a block diagram illustrating a device for navigating or generating a navigation video according to an exemplary embodiment.
Fig. 21 is a block diagram illustrating a device for navigating according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they arc merely examples of apparatuses and methods consistent with aspects related to the invention as recited in the appended claims.

The embodiments of the present disclosure that navigate for user with the navigation video. The navigation video is the video which get from the location shooting for the road. Every navigation video has the corresponding navigation parameters, at least including: navigation starting point and navigation ending point, and further including: a regional name, a road name, a season, a weather, an average driving speed and the like. The user queries the corresponding navigation video by entering the navigation parameters of the navigation request, and the navigation video is played on the terminal. With navigating by the real video, it will reduce the reaction time for maps and various simplify identification for the user during driving, and it will more sensitive for the road conditions and directions, so that improve the accuracy for navigation and also improve the user experience.

Wherein the navigation starting point and the navigation ending point may be entered by the user, or GPS may locate the current position as the navigation starting point automatically. The navigation parameters bellowing may be entered by the user, or obtaining the navigation parameters by GPS, detecting automatically, the navigation parameters may include at least one of: regional name, road name, season, weather, average driving speed, driving distance.

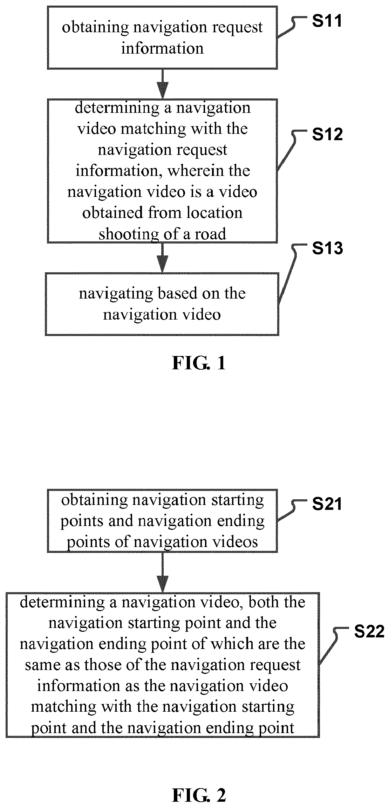

Fig. 1 is a flow diagram illustrating a method for navigating according to an exemplary embodiment, as shown in Fig.1, the method for navigating is used to the terminal or the network, the method includes step S11-S13 as follow:
in step S11, obtaining navigation request information;
in step S12, determining a navigation video matching with the navigation request information, wherein the navigation video is the video obtained from the location shooting of the road;
in step S13, navigating based on the navigation video.

In the present embodiment, by navigating with the real video, it will reduce the reaction time for maps and various simplify identification for the user during driving, and with more sensitive for the road conditions and directions, it will navigate for the user more directly to avoid missing in complicated built environment or multi-intersections environment, so that improve the accuracy for navigation and also improve the user experience.

Alternatively, the navigation request information includes navigation parameters of a navigation starting point and a navigation ending point, step S12 may be implement with three manners as follow:

### Manner 1

Fig. 2 is a flow diagram illustrating a method for navigating according to another exemplary embodiment, as shown in Fig. 2, step 12 includes:
in step S21, obtaining navigation starting points and navigation ending points of the navigation videos;
in step S22, determining a navigation video, both the navigation starting point and the navigation ending point of which are the same as those of the navigation request information as the navigation video matching with the navigation starting point and the navigation ending point.

In an alternative solution, querying for the corresponding navigation video according the navigation starting point and the navigation ending point of the navigation request information that can compare it with the navigation starting point and the navigation ending point of the navigation video directly, so it will get the navigation video which the user want inquire accurately.

### Manner 2

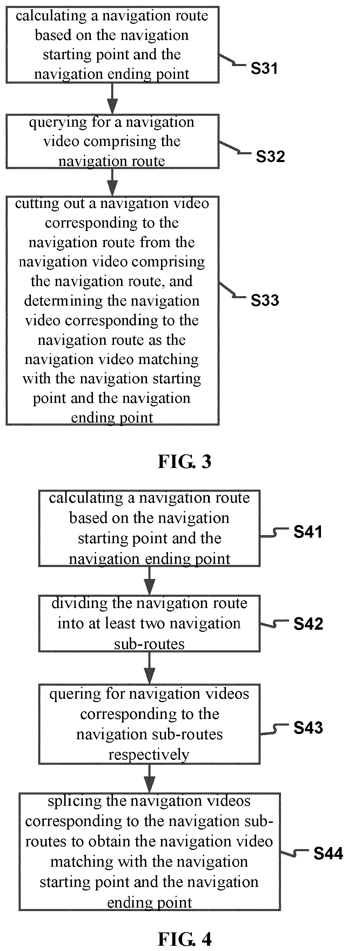

Fig. 3 is a flow diagram illustrating a method for navigating according to another exemplary embodiment, as shown in Fig. 3, step 12 includes:
in step S31, calculating a navigation route based on the navigation starting point and the navigation ending point;
in step S32, querying for a navigation video comprising the navigation route;
in step S33, cutting out a navigation video corresponding to the navigation route from the navigation video comprising the navigation route, and determining the navigation video corresponding to the navigation route as the navigation video matching with the navigation starting point and the navigation ending point.

For example, the navigation starting point and the navigation ending point which the user inquired are A and B, the corresponding navigation route is AB. There is navigation video CD shot for the navigation route CD (the navigation starting point is C and the navigation ending point is D), and the navigation route AB is one section of the navigation route CD, so it can cut out the navigation video AB which is corresponding to the navigation route AB from the navigation video CD.

Wherein, the navigation parameter which is corresponding to the navigation video CD include the road name which is corresponding to the navigation route AB or identification of place A and place B, and the driving direction between place A and place B is A to B in the navigation video CD. So it can cut out the navigation video AB which is corresponding to the navigation route AB from the navigation video CD according to the road name which is corresponding to the navigation route AB or identification of place A and place B.

In an alternative solution, if the starting point which inquired is close to the ending point, it may have no navigation video entirely matching the user requirement, but there may be the navigation videos which include the navigation route, it can cut out the navigation video which is corresponding to the inquired route from these navigation video. So it will match the navigation video that is needed accurately for the user to improve the accuracy for navigation.

### Manner 3

Fig. 4 is a flow diagram illustrating a method for navigating according to another exemplary embodiment, as shown in Fig. 4, step 12 includes:
in step S41, calculating a navigation route based on the navigation starting point and the navigation ending point;
in step S42, dividing the navigation route into at least two navigation sub-routes;
in step S43, querying for the navigation videos corresponding to the navigation sub-routes respectively;
in step S44, splicing the navigation videos corresponding to the navigation sub-routes to obtain the navigation video matching with the navigation starting point and the navigation ending point.

In an alternative solution, if the starting point which inquired is far away from the ending point, it may have no navigation video entirely matching the user requirement, but there may be the navigation videos corresponding to the certain route between the navigation starting point and the navigation ending point rcspcctivcly. So it can splice these navigation videos to obtain the navigation video which the user queried. For example, the starting point and the ending point which the user queried are A and B, the corresponding navigation route is AB. Dividing the navigation route AB into three navigation sub-routes AE, EF, EB. The navigation video AE, video EF, video EB which are corresponding to the navigation sub-routes have been queried respectively, splicing the three navigation videos to obtain the navigation video AB corresponding to the navigation route AB.

In an alternative solution, by splicing the navigation video which needed for the user, it will match the navigation video that is needed accurately for the user to improve the accuracy for navigation.

In order to improve the accuracy for matching the navigation video, it can increase the terms of the parameters that entered, for example, entering regional name, road name and the like, the terminal may determine the parameters such as season and the like based on current date, and inquire the current weather parameter from the network, detect the current driving speed of the vehicle and so on. The more navigation parameters in the navigation request, the more accurate the navigation video which queried at last is.

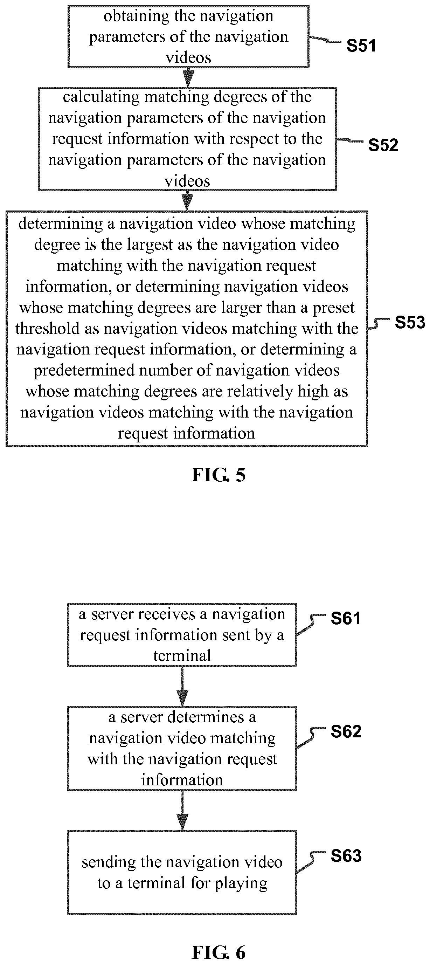

Fig. 5 is a flow diagram illustrating a method for navigating according to another exemplary embodiment, alternatively, the navigation request information further includes at least one of the following navigation parameters: a regional name, a road name, a season, a weather, an average driving speed, and a driving distance; in case that there are at least two navigation videos matching with the navigation starting point and the navigation ending point have been are obtained by querying, step S12 further includes:
in step S51, obtaining the navigation parameters of the navigation videos;
in step S52, calculating the matching degrees of the navigation parameters of the navigation request information with respect to the navigation parameters of the navigation videos;
in step S53, determining a navigation video whose matching degree is the largest as the navigation video matching with the navigation request information, or determining navigation videos whose matching degrees are larger than a preset threshold as navigation videos matching with the navigation request information, or determining a predetermined number of navigation videos whose matching degrees arc relatively high as navigation videos matching with the navigation request information.

For example, there are three navigation videos matching with the navigation starting point A and the navigation ending point B, they are Video, Video2, and Video3 respectively.

The navigation request information further includes:
Season-summer;
Weather-rainy
Average driving speed-40km/h
Road name-Road A

The navigation parameters of Video 1,Video2, and Video3 as shown in Table 1:

**Table 1**

| | Season | Weather | Average driving speed (km/h) | Road name | The matching degree with the navigation parameters of the navigation request information |
|---|---|---|---|---|---|
| Video 1 | summer | rainy | 30 | RoadA | 75% |
| Video 2 | spring | sunny | 60 | RoadA | 25% |
| Video 3 | summer | sunny | 40 | RoadB | 50% |

From Table 1, the matching degree for Video 1 and the navigation parameters of the navigation request information is highest, determining Video 1 as the navigation video which the user has queried. And it may also predetermine that pushing the navigation video which the matching degree is over 50%, or the navigation videos which the matching degree are top2 to the user and let the user select which navigation video to be used.

Since the effects of shooting video is closely related to the factors such as season, weather, driving speed and the like. For example, when shooting the video at 6:00 PM, if shooting in summer, the effects is more clear due to the day is still bright, if shooting in winter, only the building with lighting or road markings can be shot clearly due to the day is already dark. Similarly, the effects of video which shot in weather such as rainy, snowy, fog and the like have much difference with the video which shot in sunny day. Moreover, since there may be difference in the roads between the same staring point and ending point, so the navigation video which has been shot is also different. In order to match the navigation video more accurate for the user, it need to consider the navigation parameters as many as possible.

In an alternative solution, by filtering the queried navigation videos with the parameters, it will provide more accurate navigation video whose matching degree is the largest which needed for the user, to improve the accuracy for navigation and the user experience.

The method for navigating is provided in embodiments of the present disclosure, the executive bodies for practicing the method are server for navigating and terminal with navigate function. The method of the present disclosure may either be applied to the server on network or to the terminal. The terminal of the present embodiment may be any one of the devices with the function of playing video, such as mobile phone, computer, digital broadcasting terminal, message transceiver device, game console, tablet device, personal digital assistant and the like.

The present embodiment arrange two implementations for navigating according to the different executive bodies, as follow:
Network

Fig. 6 is a flow diagram illustrating a method for navigating according to another exemplary embodiment, as shown in Fig.6, the method includes steps as follow:
in step S61, the server receives navigation request information sent by a terminal;
in step S62, the server determines a navigation video matching with the navigation request information;
in step S63, the server sends the navigation video to the terminal, and the terminal plays the navigation video for the user to navigate.

In an alternative solution, if the operation of matching the navigation video based on the navigation request information is finished by the server on the network, the server need to push the navigation video which has been matched to the terminal which used to request. So it can store the navigation video data without plenty of storage space but consume certain data traffic.

### Terminal

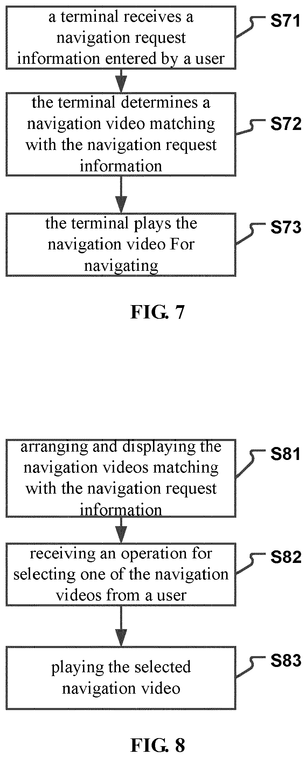

Fig. 7 is a flow diagram illustrating a method for navigating according to another exemplary embodiment, as shown in Fig.7, the method includes steps as follow:
in step S71, the terminal receives a navigation request information entered by the user;
in step S72, the terminal determines the navigation video matching with the navigation request information;
in step S73, the terminal plays the navigation video for navigating.

In an alternative solution, if the operation of matching the navigation video based on the navigation request information is finished by the terminal, the terminal pre-store a lot of navigation video data, it will consume the storage space of the terminal but save the data traffic of the terminal, since the querying is finished in local, the speed of processing is quicker.

No matter the server or the terminal is matching the navigation video, if there are many hours in the navigation video which has matched, the user can select when the terminal plays the navigation video.

Fig. 8 is a flow diagram illustrating a method for navigating according to another exemplary embodiment, as shown in Fig.8, alternatively, wherein when at least two navigation videos matching with the navigation request information are determined, executing the steps as follow:
in step S81, arranging and displaying the navigation video matching with the navigation request information ;
in step S82, receiving an operation for selecting one of the navigation videos from a user;
in step S83, playing the selected navigation video.

In an alternative solution, the queried navigation videos are displayed for the user, and the user select to use which of the navigation videos, to enable the more intelligent navigation and the better user experience.

In order to improve the effects of navigation, adjusting the playing speed of the navigation video based on the driving speed during driving.

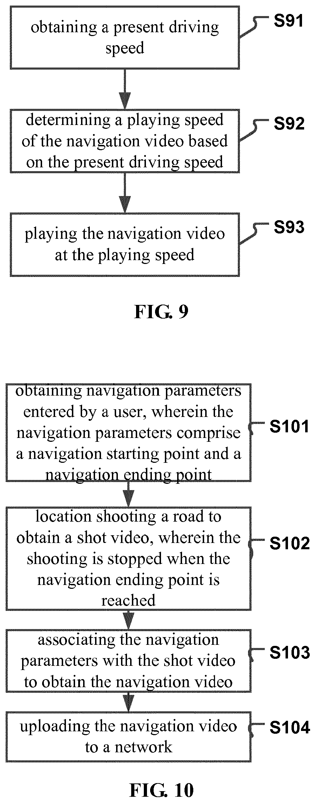

Fig. 9 is a flow diagram illustrating a method for navigating according to another exemplary embodiment, as shown in Fig.9, alternatively, executing the steps as follow:
in step S91, obtaining a present driving speed;
in step S92, determining a playing speed of the navigation video based on the present driving speed;
in step S93, playing the navigation video at the playing speed.

In an alternative solution, adjusting the playing speed of the navigation video based on the present driving speed during driving, for example, when the user slows down, the playing speed of the navigation video is also speed down; when the user stops, the navigation video is stop playing; when the user accelerates, the playing speed of the navigation video is also speed up. So the playing speed is matched with the present driving speed. The picture that the user has viewed is the picture of the present road, it enable the more accurate effects of the navigation and the better user experience.

Alternatively, the method further includes: synchronizing navigation data from a network, wherein the navigation data include the navigation video; storing the navigation data in a local navigation database. In step S72 described above, querying for the navigation video matching with the navigation request information from the local navigation database.

In an alternative solution, it can synchronize the navigation data from the network in advance, for example, in WiFi, the user download the navigation video of current city or the region that needed, so when navigating in real-time, it will not have to consume the data traffic anymore. The processing of synchronizing the navigation data from the network may be periodic, for example, synchronizing per week.

The method for generating a navigation video is provided in embodiments of the present disclosure, the method is applied to a terminal. The terminal of the present embodiment may be any one of the devices with the function of recording video, such as mobile phone, computer, digital broadcasting terminal, message transceiver device, game console, tablet device, personal digital assistant, tachograph and the like.

Fig. 10 is a flow diagram illustrating a method for generating a navigation video according to an exemplary embodiment, as shown in Fig.10, the method includes the steps as follow:
in step S101, obtaining navigation parameters entered by a user, wherein the navigation parameters include navigation starting point and navigation ending point;
in step S102, location shooting a road to obtain a shot video, wherein the shooting is stopped when the navigation ending point is reached;
in step S103, associating the navigation parameters with the shot video to obtain the navigation video;
in step S104, uploading the navigation video to a network.

In the present embodiment, the terminal is used to local shoot for the live-action, associate the navigation parameters to generate navigation video and send it to the server on network. So when the other user is driving on the same road, this navigation video can be used to navigate, it will reduce the reaction time for maps and various simplify identification for the user during driving, and it will more sensitive for the road conditions and directions, so that improve the accuracy for navigation and also improve the user experience.

Alternatively, the method further includes:
recording driving speeds; calculating an average driving speed based on the driving speeds;
the step S103 further includes: taking the average driving speed as a navigation parameter to associate it with the shot video.

In an alternative solution, it can increase the average driving speed in navigation parameters, so when matching the navigation video in subsequent, the accuracy of matching is higher, so that the accuracy for navigation is improved.

Additionally, the terminal can record the navigation parameters like driving distance corresponding to the navigation video, in order to inquire the matching accurately in subsequent.

The following is the embodiments of a device which can execute the embodiments of the method of the present disclosure.

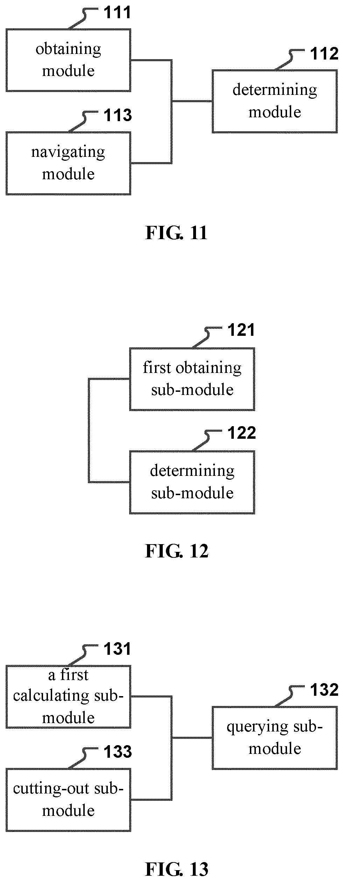

Fig. 11 is a block diagram illustrating a device for navigating according to an exemplary embodiment. The device may be implemented as entire or a part of an electrical device by using hardware, software or any combination thereof. As shown in Fig. 11, the device for navigating may include:

an obtaining module 111 configured to obtain navigation request information;
a determining module 112 configured to determine a navigation video matching with the navigation request information, wherein the navigation video is the video obtained from location shooting of a road;
a navigating module 113 configured to navigate based on the navigation video.

Fig. 12 is a block diagram illustrating a determining module according to an exemplary embodiment, as shown in Fig. 12, alternatively the navigation request information includes navigation parameters of a navigation starting point and a navigation ending point, the determining module 112 includes:
a first obtaining sub-module 121 configured to obtain the navigation starting points and navigation ending points of the navigation videos;
a determining sub-module 122 configured to determine a navigation video, both the navigation starting point and the navigation ending point of which are the same as those of the navigation request information as the navigation video matching with the navigation starting point and the navigation ending point.

Fig. 13 is a block diagram illustrating a determining module according to an exemplary embodiment, as shown in Fig. 13, alternatively the navigation request information includes navigation parameters of a navigation starting point and a navigation ending point, the determining module 112 includes:
a first calculating sub-module 131 configured to calculate a navigation route based on the navigation starting point and the navigation ending point;
an querying sub-module 132 configured to query for the navigation video which includes the navigation route;
a cutting-out sub-module 133 configured to cut out a navigation video corresponding to the navigation route from the navigation video which includes the navigation route, and determining the navigation video corresponding to the navigation route as the navigation video matching with the navigation starting point and the navigation ending point.

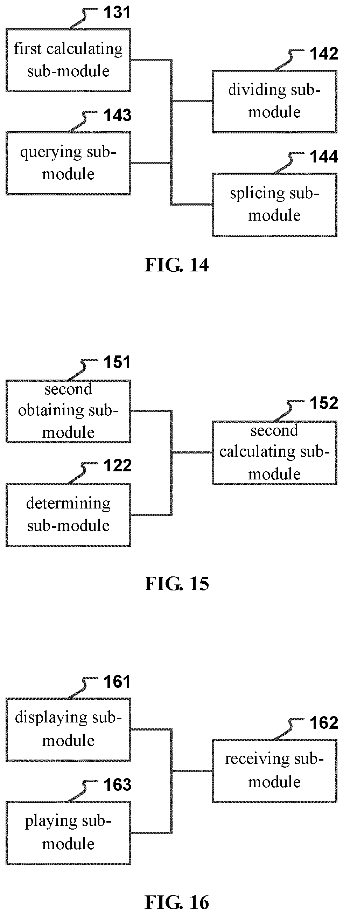

Fig. 14 is a block diagram illustrating a determining module according to an exemplary embodiment, as shown in Fig. 14, alternatively the navigation request information includes navigation parameters of a navigation starting point and a navigation ending point, the determining module 112 includes:
a first calculating 131 sub-module configured to calculate a navigation route based on the navigation starting point and the navigation ending point;
a dividing sub-module 142 configured to divide the navigation route into at least two navigation sub-routes;
an querying sub-module 143 configured to query for the navigation videos corresponding to the navigation sub-routes respectively;
a splicing sub-module 144 configured to splice the navigation videos corresponding to the navigation sub-routes to obtain the navigation video matching with the navigation starting point and the navigation ending point.

Fig. 15 is a block diagram illustrating a determining module according to an exemplary embodiment, as shown in Fig. 15, alternatively, the navigation request information further includes at least one of the following navigation parameters: a regional name, a road name, a season, a weather, an average driving speed, and a driving distance; and the determining module further includes:
a second obtaining sub-module 151 configured to, in case that at least two navigation videos matching with the navigation starting point and the navigation ending point are obtained by querying;
a second calculating sub-module 152 configured to calculate the matching degrees for the navigation parameters of the navigation request information with respect to the navigation parameters of the navigation videos;
the determining sub-module 122 configured to determine a navigation video whose matching degree is the largest as the navigation video matching with the navigation request information, or determining navigation videos whose matching degrees are larger than a preset threshold as navigation videos matching with the navigation request information, or determining a predetermined number of navigation videos whose matching degrees are relatively high as navigation videos matching with the navigation request information.

Alternatively, the navigating module is configured to send the navigation video to a terminal for playing when the device is applied to a network.

Alternatively, the navigating module is configured to play the navigation video when the device is applied to a terminal.

Fig. 16 is a block diagram illustrating a navigating module according to an exemplary embodiment, as shown in Fig. 16, alternatively, the navigating module 113 includes:
a displaying sub-module 161 configured to arrange and display the navigation videos matching with the navigation request information when at least two navigation videos matching with the navigation request information are determined;
a receiving sub-module 162 configured to receive an operation for selecting one of the navigation video from a user;
a playing sub-module 163 configured to play the selected navigation video.

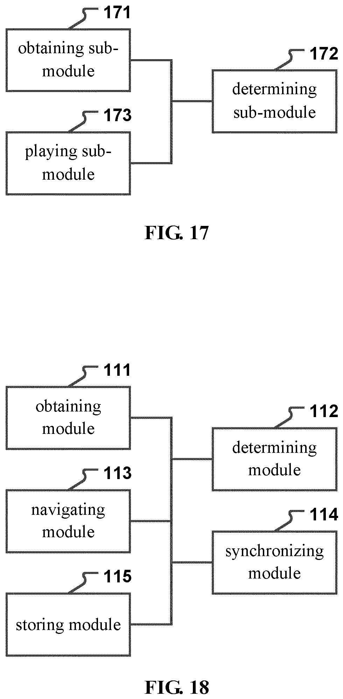

Fig. 17 is a block diagram illustrating a navigating module according to an exemplary embodiment, as shown in Fig. 17, alternatively, the navigating module 113 includes:
an obtaining sub-module 171 configured to obtain a present driving speed;
a determining sub-module 172 configured to determine a playing speed of the navigation video based on the present driving speed;
a playing sub-module 173 configured to play the navigation video at the playing speed.

Fig. 18 is a block diagram illustrating a device for navigating according to another exemplary embodiment. As shown in Fig.18, alternatively, the device further includes:
a synchronizing module 114 configured to synchronize navigation data from the a network when the device is applied to a terminal, the navigation data include the navigation video;
a storing module 115 configured to store the navigation data in a local navigation database;
wherein the determining module 112 is configured to query for the navigation video matching with the navigation request information from the local navigation database.

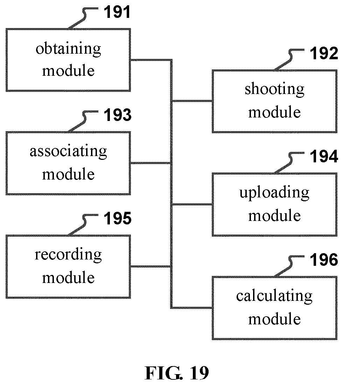

Fig. 19 is a block diagram illustrating a device for generating a navigation video according to an exemplary embodiment. As shown in Fig.19, the device includes:
an obtaining module 191 configured to obtain navigation parameters entered by a user, the navigation parameters include a navigation starting point and a navigation ending point;
a shooting module 192 configured to location shoot a road to obtain a shot video, wherein the shooting is stopped when the navigation ending point is reached;
an associating module 193 configured to associate the navigation parameters with the shot video to obtain the navigation video;
an uploading module 194 configured to upload the navigation video to a network.

As shown in Fig. 19, alternatively, the method further includes:
a recording module 195 configured to record driving speeds;
a calculating module 196 configured to calculate an average driving speed based on the driving speeds;
the associating module 193 configured to take the average driving speed as a navigation parameter to associate it with the shot video.

With respect to the devices in the above embodiments, the specific manners that the respective modules perform operations have been described in detail in the embodiments regarding the relevant methods, and will not be elaborated herein.

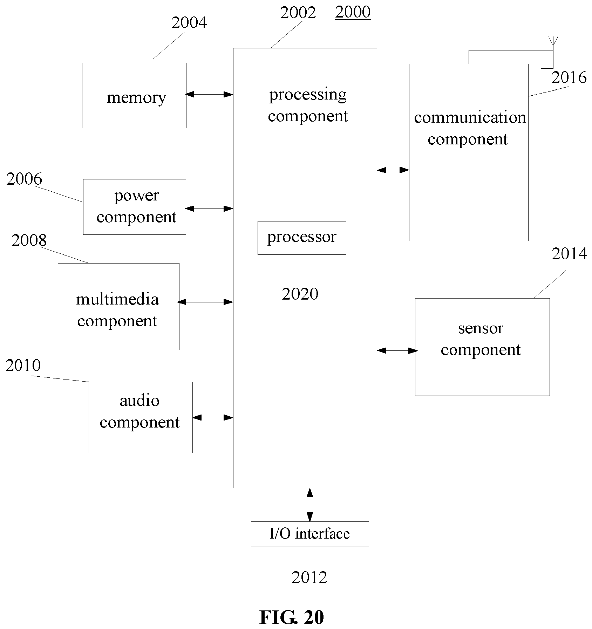

Fig. 20 is a block diagram illustrating a device for navigating or generating a navigation video according to an exemplary embodiment, the device is suitable for the terminal device. For example, the device 2000 may be the video camera, recording device, mobile phone, computer, digital broadcasting terminal, message transceiver device, game console, tablet device, medical facility, fitness facility, personal digital assistant and the like.

The device 2000 may include one or more of the following components: a processing component 2002, a memory 2004, a power component 2006, a multimedia component 2008, an audio component 2010, an input/output (I/O) interface 2012, a sensor component 2014, and a communication component 2016.

The processing component 2002 typically controls overall operations of the device 2000, such as the operations associated with display, telephone calls, data communications, camera operations, and recording operations. The processing component 2002 may include one or more processors 2020 to execute instructions to perform all or part of the steps in the above described methods. Moreover, the processing component 2002 may include one or more modules which facilitate the interaction between the processing component 2002 and other components. For instance, the processing component 2002 may include a multimedia module to facilitate the interaction between the multimedia component 2008 and the processing component 2002.

The memory 2004 is configured to store various types of data to support the operation of the device 2000. Examples of such data include instructions for any applications or methods operated on the device 2000, contact data, phonebook data, messages, pictures, video, etc. The memory 2004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2006 provides power to various components of the device 2000. The power component 2006 may include a power management system, one or more power sources, and any other components associated with the generation, management, and distribution of power for the device 2000.

The multimedia component 2008 includes a screen providing an output interface between the device 2000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touchcs, swipes, and gestures on the touch panel. The touch sensors may not only sense a boundary of a touch or swipe action, but also sense a period of time and a pressure associated with the touch or swipe action. In some embodiments, the multimedia component 2008 includes a front camera and/or a rear camera. The front camera and the rear camera may receive an external multimedia datum while the device 2000 is in an operation mode, such as a photographing mode or a video mode. Each of the front camera and the rear camera may be a fixed optical lens system or have optical focusing and zooming capability.

The audio component 2010 is configured to output and/or input audio signals. For example, the audio component 2010 includes a microphone ("MIC") configured to receive an external audio signal when the device 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, the peripheral interface modules being, for example, a keyboard, a click wheel, buttons, and the like. The buttons may include, but are not limited to, a home button, a volume button, a starting button, and a locking button.

The sensor component 2014 includes one or more sensors to provide status assessments of various aspects of the device 2000. For instance, the sensor component 2014 may detect an open/closed status of the device 2000, relative positioning of components (e.g., the display and the keypad, of the device 2000), a change in position of the device 2000 or a component of the device 2000, a presence or absence of user contact with the device 2000, an orientation or an acceleration/deceleration of the device 2000, and a change in temperature of the device 2000. The sensor component 2014 may include a proximity sensor configured to detect the presence of a nearby object without any physical contact. The sensor component 2014 may also include a light sensor, such as a CMOS or CCD image sensor, for use in imaging applications. In some embodiments, the sensor component 2014 may also include an accelerometer sensor, a gyroscope sensor, a magnetic sensor, a pressure sensor, or a temperature sensor.

The communication component 2016 is configured to facilitate communication, wired or wirelessly, between the device 2000 and other devices. The device 2000 can access a wireless network based on a communication standard, such as WiFi, 2G, or 3G, or a combination thereof. In an exemplary embodiment, the communication component 2016 receives a broadcast signal or broadcast associated information from an external broadcast management system via a broadcast channel. In an exemplary embodiment, the communication component 2016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2004, executable by the processor 2020 in the device 2000, for performing the above-described methods. For example, the non-transitory computer-readable storage medium may be a ROM, a RAM, a CD-ROM, a magnetic tape, a floppy disc, an optical data storage dcvicc, and the like.

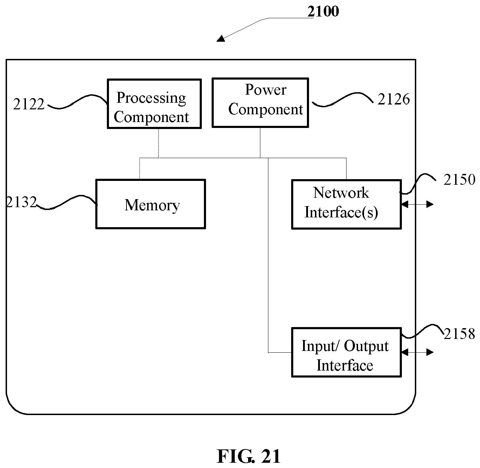

FIG. 21 is a block diagram of a device for navigating according to an exemplary embodiment. For example, the device 2100 may be a server. The device 2100 may include a processing component 2122 (e.g. one or more processors), and the memory resource represented by a memory 2132, which used to store the instructions executable by the processing component 2122, such as application. The application stored in memory 2132 includes one or more modules corresponding to the instructions. Additionally, the processing component 2122 is configured to execute instructions, in order to execute the method above.

The device 2100 may also include a power supply 2126 which configured to execute the power manager of the device 2100, a wired or wireless network interfaces 908 which configured to connect the apparatus 900 to network, and an input/output interface 2158. The device 2100 can be operated based on the operating systems stored in the memory 2132, such as Windows Server™, Mac OS X™, Unix™, Linux™ FreeBSD™, or the like.

## Claims

1. A method for navigating, comprising the steps of:
obtaining (S11) navigation request information;
determining (S12) a navigation video matching with the navigation request information, wherein the navigation video is a video obtained from location shooting of a road;
playing (S13) the navigation video, for a user to navigate, wherein
the navigation request information comprises navigation parameters of a navigation starting point and a navigation ending point, and the processing of determining a navigation video matching with the navigation request information comprises:
calculating (S31) a navigation route based on the navigation starting point and the navigation ending point;
querying (S32) for a navigation video comprising the navigation route;
cutting out (S33) a navigation video corresponding to the navigation route from the navigation video comprising the navigation route, and determining the navigation video corresponding to the navigation route as the navigation video matching with the navigation request information,
**characterised in that** the navigation request information further comprises at least one of the following navigation parameters: a region name, a road name, a season, weather, an average driving speed, and a driving distance, and when at least two navigation videos matching with the navigation starting point and the navigation ending point are obtained by querying, the processing of determining a navigation video matching with the navigation request information further comprises:
obtaining (S51) the navigation parameters of the navigation videos;
calculating (S52) matching degrees of the navigation parameters of the navigation request information with respect to the navigation parameters of the navigation videos;
determining (S53) a navigation video whose matching degree is the largest as the navigation video matching with the navigation request information, or determining navigation videos whose matching degrees are larger than a preset threshold as navigation videos matching with the navigation request information, or determining a predetermined number of navigation videos whose matching degrees are relatively high as navigation videos matching with the navigation request information, wherein
when a plurality of navigation videos are determined to be matching with the navigation request information, any of the plurality of navigation videos can be selected by the user for playing.

2. The method of claim 1, wherein when the method is applied to a network, the processing of playing the navigation video comprises:
sending (S63) the navigation video to a terminal for playing.

3. The method of claim 1, wherein when the method is applied to a terminal,
when at least two navigation videos matching with the navigation request information are determined, the processing of playing the navigation video comprises:
arranging and displaying (S81) the navigation videos matching with the navigation request information;
receiving (S82) an operation for selecting one of the navigation videos from a user;
playing (S83) the selected navigation video;
or the processing of playing the navigation video comprises:
obtaining (S91) a present driving speed;
determining (S92) a playing speed of the navigation video based on the present driving speed;
playing (S93) the navigation video at the playing speed.

4. The method of claim 1, when the method is applied to a terminal, the method comprising:
downloading navigation data from a network, wherein the navigation data comprises the navigation video;
storing the navigation data in a local navigation database;
the processing of determining a navigation video matching with the navigation request information comprises:
querying for the navigation video matching with the navigation request information from the local navigation database.

5. A device for navigating, comprising the steps:
an obtaining module (111) configured to obtain navigation request information;
a determining module (112) configured to determine a navigation video matching with the navigation request information, wherein the navigation video is a video obtained from location shooting of a road;
a navigating module (113) configured to playing the navigation video for a user to navigate, wherein
the navigation request information comprises navigation parameters of a navigation starting point and a navigation ending point, and the determining module (112) comprises:
a first calculating sub-module (131) configured to calculate a navigation route based on the navigation starting point and the navigation ending point;
an querying sub-module (132) configured to query for a navigation video comprising the navigation route;
a cutting-out sub-module (133) configured to cut out a navigation video corresponding to the navigation route from the navigation video comprising the navigation route, and determine the navigation video corresponding to the navigation route as the navigation video matching with the navigation request information,
**characterised in that** the navigation request information further comprises at least one of the following navigation parameters: a regional name, a road name, a season, weather, an average driving speed, and a driving distance, the determining module (112) further comprises:
a second obtaining sub-module (151) configured to, in case that at least two navigation videos matching with the navigation starting point and the navigation ending point are obtained by quering, obtain the navigation parameters of the navigation videos;
a second calculating sub-module (152) configured to calculate matching degrees of the navigation parameters of the navigation request information with respect to the navigation parameters of the navigation videos;
the determining sub-module (122) configured to determine a navigation video whose matching degree is the largest as the navigation video matching with the navigation request information, or determine navigation videos whose matching degree are larger than a preset threshold as navigation videos matching with the navigation request information, or determine a predetermined number of navigation videos whose matching degrees are relatively high as navigation videos matching with the navigation request information, wherein
when a plurality of navigation videos are determined to be matching with the navigation request information, any of the plurality of navigation videos can be selected by the user for playing.

6. The device of claim 5, wherein the navigating module (113) is configured to send the navigation video to a terminal for playing when the device is applied to a network.

7. The device of claim 5, wherein the navigating module (113) is configured to play the navigation video when the device is applied to a terminal, and
the navigating module (113) comprises:
a displaying sub-module (161) configured to, when at least two navigation videos matching with the navigation request information are determined, arrange and display the navigation videos matching with the navigation request information;
a receiving sub-module (162) configured to receive an operation for selecting one of the navigation videos from a user;
a playing sub-module (163) configured to play the selected navigation video;
or the navigating module (113) comprises:
an obtaining sub-module (171) configured to obtain a present driving speed;
a determining sub-module (172) configured to determine a playing speed of the navigation video based on the present driving speed;
a playing sub-module (173) configured to play the navigation video at the playing speed.

8. The device of claim 5, further comprising:
a synchronizing module (114) configured to download navigation data from a network when the device is applied to a terminal, wherein the navigation data comprises the navigation video;
a storing module (115) configured to store the navigation data in a local navigation database;
wherein the determining module (112) is configured to query for the navigation video matching with the navigation request information from the local navigation database.

## Patentansprüche

1. Verfahren zum Navigieren, das die folgenden Schritte beinhaltet:
Einholen (S11) von Navigationsanforderungsinformationen;
Bestimmen (S12) eines Navigationsvideos, das mit den Navigationsanforderungsinformationen übereinstimmt, wobei das Navigationsvideo ein von einer Aufnahme eines Orts einer Straße gewonnenes Video ist;
Abspielen (S13) des Navigationsvideos für einen Benutzer zum Navigieren, wobei die Navigationsanforderungsinformationen Navigationsparameter eines Navigationsstartpunkts und eines Navigationsendpunkts umfassen, und die Verarbeitung zur Bestimmung eines mit den Navigationsanforderungsinformationen übereinstimmenden Navigationsvideos Folgendes beinhaltet:
Berechnen (S31) einer Navigationsroute auf der Basis des Navigationsstartpunkts und des Navigationsendpunkts;
Abfragen (S32) nach einem Navigationsvideo, das die Navigationsroute umfasst;
Ausschneiden (S33) eines Navigationsvideos entsprechend der Navigationsroute aus dem die Navigationsroute umfassenden Navigationsvideo und Bestimmen des Navigationsvideos entsprechend der Navigationsroute als das mit den Navigationsanforderungsinformationen übereinstimmende Navigationsvideo,
**dadurch gekennzeichnet, dass** die Navigationsanforderungsinformationen ferner wenigstens einen der folgenden Navigationsparameter beinhalten: einen Regionsnamen, einen Straßennamen, eine Jahreszeit, Wetter, eine durchschnittliche Fahrgeschwindigkeit und eine Fahrdistanz, und wobei wenigstens zwei Navigationsvideos, die mit dem Navigationsstartpunkt und dem Navigationsendpunkt übereinstimmen, durch Abfragen erhalten werden, wobei die Verarbeitung zur Bestimmung eines mit den Navigationsanforderungsinformationen übereinstimmenden Navigationsvideos ferner Folgendes beinhaltet:
Einholen (S51) der Navigationsparameter der Navigationsvideos;
Berechnen (S52) von Übereinstimmungsgraden der Navigationsparameter der Navigationsanforderungsinformationen mit Bezug auf die Navigationsparameter der Navigationsvideos;
Bestimmen (S53) eines Navigationsvideos mit dem größten Übereinstimmungsgrad als das mit den Navigationsanforderungsinformationen übereinstimmende Navigationsvideo, oder Bestimmen von Navigationsvideos, deren Übereinstimmungsgrade größer sind als ein voreingestellter Schwellenwert, als Navigationsvideos, die mit den Navigationsanforderungsinformationen übereinstimmen, oder Bestimmen einer vorbestimmten Anzahl von Navigationsvideos mit relativ hohen Übereinstimmungsgraden als mit den Navigationsanforderungsinformationen übereinstimmende Navigationsvideos, wobei
wenn mehrere Navigationsvideos als mit den Navigationsanforderungsinformationen übereinstimmend festgestellt werden, beliebige der Navigationsvideos vom Benutzer zum Abspielen ausgewählt werden können.

2. Verfahren nach Anspruch 1, wobei das Verfahren auf ein Netzwerk angewendet wird, wobei die Verarbeitung zum Abspielen des Navigationsvideos Folgendes beinhaltet:
Senden (S63) des Navigationsvideos zu einem Endgerät zum Abspielen.

3. Verfahren nach Anspruch 1, wobei, wenn das Verfahren auf ein Endgerät angewendet wird,
wenn wenigstens zwei mit den Navigationsanforderungsinformationen übereinstimmende Navigationsvideos bestimmt werden, die Verarbeitung zum Abspielen des Navigationsvideos Folgendes beinhaltet:
Anordnen und Anzeigen (S81) der mit den Navigationsanforderungsinformationen übereinstimmenden Navigationsvideos;
Empfangen (S82) einer Operation zum Auswählen eines der Navigationsvideos von einem Benutzer;
Abspielen (S83) des gewählten Navigationsvideos;
oder wobei die Verarbeitung zum Abspielen des Navigationsvideos Folgendes beinhaltet:
Einholen (S91) einer aktuellen Fahrgeschwindigkeit;
Bestimmen (S92) einer Abspielgeschwindigkeit des Navigationsvideos auf der Basis der aktuellen Fahrgeschwindigkeit;
Abspielen (S93) des Navigationsvideos mit der Abspielgeschwindigkeit.

4. Verfahren nach Anspruch 1, wobei das Verfahren, wenn es auf ein Endgerät angewendet wird, Folgendes beinhaltet:
Herunterladen von Navigationsdaten von einem Netzwerk, wobei die Navigationsdaten das Navigationsvideo umfassen;
Speichern der Navigationsdaten in einer lokalen Navigationsdatenbank;
wobei die Verarbeitung zur Bestimmung eines mit den Navigationsanforderungsinformationen übereinstimmenden Navigationsvideos Folgendes beinhaltet:
Abfragen nach dem mit den Navigationsanforderungsinformationen übereinstimmenden Navigationsvideo in der lokalen Navigationsdatenbank.

5. Gerät zum Navigieren, umfassend die folgenden Schritte:
ein Einholmodul (111), konfiguriert zum Einholen von Navigationsanforderungsinformationen;
ein Bestimmungsmodul (112), konfiguriert zum Bestimmen eines mit den Navigationsanforderungsinformationen übereinstimmenden Navigationsvideos, wobei das Navigationsvideo ein von einer Aufnahme eines Ortes einer Straße gewonnenes Video ist;
ein Navigationsmodul (113), konfiguriert zum Abspielen des Navigationsvideos für einen Benutzer zum Navigieren, wobei
die Navigationsanforderungsinformationen Navigationsparameter eines Navigationsstartpunkts und eines Navigationsendpunkts umfassen und das Bestimmungsmodul (112) Folgendes umfasst:
ein erstes Berechnungssubmodul (131), konfiguriert zum Berechnen einer Navigationsroute auf der Basis des Navigationsstartpunkts und des Navigationsendpunkts;
ein Abfragesubmodul (132), konfiguriert zum Abfragen nach einem die Navigationsroute umfassenden Navigationsvideo;
ein Ausschneidesubmodul (133), konfiguriert zum Ausschneiden eines Navigationsvideos entsprechend der Navigationsroute aus dem die Navigationsroute umfassenden Navigationsvideo, und Bestimmen des Navigationsvideos entsprechend der Navigationsroute als das mit den Navigationsanforderungsinformationen übereinstimmende Navigationsvideo,
**dadurch gekennzeichnet, dass** die Navigationsanforderungsinformationen ferner wenigstens einen der folgenden Navigationsparameter umfassen: einen Regionsnamen, einen Straßennamen, eine Jahreszeit, Wetter, eine durchschnittliche Fahrgeschwindigkeit und eine Fahrdistanz, wobei das Bestimmungsmodul (112) ferner Folgendes umfasst:
ein zweites Einholsubmodul (151), konfiguriert zum Einholen, falls wenigstens zwei mit dem Navigationsstartpunkt und dem Navigationsendpunkt übereinstimmende Navigationsvideos durch Abfragen erhalten werden, der Navigationsparameter der Navigationsvideos;
ein zweites Berechnungssubmodul (152), konfiguriert zum Berechnen von Übereinstimmungsgraden der Navigationsparameter der Navigationsanforderungsinformationen mit Bezug auf die Navigationsparameter der Navigationsvideos;
wobei das Bestimmungssubmodul (122) konfiguriert ist zum Bestimmen eines Navigationsvideos mit dem größten Übereinstimmungsgrad als das mit den Navigationsanforderungsinformationen übereinstimmende Navigationsvideo oder zum Bestimmen von Navigationsvideos, deren Übereinstimmungsgrad größer ist als ein voreingestellter Schwellenwert, als mit den Navigationsanforderungsinformationen übereinstimmende Navigationsvideos oder zum Bestimmen einer vorbestimmten Anzahl von Navigationsvideos mit relativ hohen Übereinstimmungsgraden als mit den Navigationsanforderungsinformationen übereinstimmende Navigationsvideos, wobei
wenn mehrere Navigationsvideos als mit den Navigationsanforderungsinformationen übereinstimmend festgestellt werden, beliebige der mehreren Navigationsvideos vom Benutzer zum Abspielen ausgewählt werden können.

6. Gerät nach Anspruch 5, wobei das Navigationsmodul (113) zum Senden des Navigationsvideos zu einem Endgerät zum Abspielen konfiguriert ist, wenn das Gerät auf ein Netzwerk angewendet wird.

7. Gerät nach Anspruch 5, wobei das Navigationsmodul (113) zum Abspielen des Navigationsvideos konfiguriert ist, wenn das Gerät auf ein Endgerät angewendet wird, und
das Navigationsmodul (113) Folgendes umfasst:
ein Anzeigesubmodul (161), konfiguriert zum Anordnen und Anzeigen, wenn wenigstens zwei mit den Navigationsanforderungsinformationen übereinstimmende Navigationsvideos festgestellt werden, der mit den Navigationsanforderungsinformationen übereinstimmenden Navigationsvideos;
ein Empfangssubmodul (162), konfiguriert zum Empfangen einer Operation zum Auswählen von einem der Navigationsvideos von einem Benutzer;
ein Abspielsubmodul (163), konfiguriert zum Abspielen des gewählten Navigationsvideos;
oder das Navigationsmodul (113) Folgendes umfasst:
ein Einholsubmodul (171), konfiguriert zum Einholen einer aktuellen Fahrgeschwindigkeit;
ein Bestimmungssubmodul (172), konfiguriert zum Bestimmen einer Abspielgeschwindigkeit des Navigationsvideos auf der Basis der aktuellen Fahrgeschwindigkeit;
ein Abspielsubmodul (173), konfiguriert zum Abspielen des Navigationsvideos mit der Abspielgeschwindigkeit.

8. Gerät nach Anspruch 5, das ferner Folgendes umfasst:
ein Synchronisationsmodul (114), konfiguriert zum Herunterladen von Navigationsdaten von einem Netzwerk, wenn das Gerät auf ein Endgerät angewendet wird, wobei die Navigationsdaten das Navigationsvideo umfassen;
ein Speichermodul (115), konfiguriert zum Speichern der Navigationsdaten in einer lokalen Navigationsdatenbank;
wobei das Bestimmungsmodul (112) zum Abfragen nach dem mit den Navigationsanforderungsinformationen übereinstimmenden Navigationsvideo aus der lokalen Navigationsdatenbank konfiguriert ist.

## Revendications

1. Procédé de navigation, comprenant les étapes suivantes :
l'obtention (S11) d'informations de demande de navigation ;
la détermination (S12) d'une vidéo de navigation correspondant aux informations de demande de navigation, la vidéo de navigation étant une vidéo obtenue par prise de vues en extérieur d'une route ;
la lecture (S13) de la vidéo de navigation, permettant à un utilisateur de naviguer, dans lequel
les informations de demande de navigation comprennent des paramètres de navigation d'un point de début de navigation et d'un point de fin de navigation, et le traitement de détermination d'une vidéo de navigation correspondant aux informations de demande de navigation comprend :
le calcul (S31) d'une route de navigation sur la base du point de début de navigation et du point de fin de navigation ;
l'interrogation (S32) d'une vidéo de navigation comprenant la route de navigation ;
l'extraction (S33) d'une vidéo de navigation correspondant à la route de navigation de la vidéo de navigation comprenant la route de navigation, et la détermination de la vidéo de navigation correspondant à la route de navigation en tant que vidéo de navigation correspondant aux informations de demande de navigation,
**caractérisé en ce que** les informations de demande de navigation comprennent en outre au moins un des paramètres de navigation suivants : un nom de région, un nom de route, une saison, un état météorologique, une vitesse de conduite moyenne et une distance de conduite, et quand au moins deux vidéos de navigation correspondant au point de début de navigation et au point de fin de navigation sont obtenues par interrogation, le traitement de détermination d'une vidéo de navigation correspondant aux informations de demande de navigation comprend en outre :
l'obtention (S51) des paramètres de navigation des vidéos de navigation ;
le calcul (S52) de degrés de correspondance des paramètres de navigation des informations de demande de navigation relativement aux paramètres de navigation des vidéos de navigation ;
la détermination (S53) d'une vidéo de navigation dont le degré de correspondance est le plus élevé en tant que vidéo de navigation correspondant aux informations de demande de navigation, ou la détermination des vidéos de navigation dont les degrés de correspondance sont supérieurs à un seuil prédéfini en tant que vidéos de navigation correspondant aux informations de demande de navigation, ou la détermination d'un nombre prédéterminé de vidéos de navigation dont les degrés de correspondance sont relativement élevés en tant que vidéos de navigation correspondant aux informations de demande de navigation, dans lequel
quand il est déterminé qu'une pluralité de vidéos de navigation correspond aux informations de demande de navigation, l'utilisateur peut sélectionner n'importe laquelle de la pluralité de vidéos de navigation en vue de sa lecture.

2. Procédé selon la revendication 1, dans lequel quand le procédé est appliqué à un réseau, le traitement de lecture de la vidéo de navigation comprend :
l'envoi (S63) de la vidéo de navigation à un terminal en vue de sa lecture.

3. Procédé selon la revendication 1, dans lequel quand le procédé est appliqué à un terminal,
quand au moins deux vidéos de navigation correspondant aux informations de demande de navigation sont déterminées, le traitement de lecture de la vidéo de navigation comprend :
l'agencement et l'affichage (S81) des vidéos de navigation correspondant aux informations de demande de navigation ;
la réception (S82) d'une opération de sélection d'une des vidéos de navigation par un utilisateur ;
la lecture (S83) de la vidéo de navigation sélectionnée ;
ou le traitement de lecture de la vidéo de navigation comprend :
l'obtention (S91) d'une vitesse de conduite actuelle ;
la détermination (S92) d'une vitesse de lecture de la vidéo de navigation sur la base de la vitesse de conduite actuelle ;
la lecture (S93) de la vidéo de navigation à la vitesse de lecture.

4. Procédé selon la revendication 1, le procédé comprenant, quand il est appliqué à un terminal :
le téléchargement de données de navigation à partir d'un réseau, les données de navigation comprenant la vidéo de navigation ;
la mémorisation des données de navigation dans une base de données de navigation locale
le traitement de détermination d'une vidéo de navigation correspondant aux informations de demande comprenant :
l'interrogation de la vidéo de navigation correspondant aux informations de demande de navigation à partir de la base de données de navigation locale.

5. Dispositif de navigation, comprenant les étapes :
un module d'obtention (111) configuré pour obtenir des informations de demande de navigation ;
un module de détermination (112) configuré pour déterminer une vidéo de navigation correspondant aux informations de demande de navigation, la vidéo de navigation étant une vidéo obtenue par prise de vues en extérieur d'une route ;
un module de navigation (113) configuré pour lire la vidéo de navigation permettant à un utilisateur de naviguer, dans lequel
les informations de demande de navigation comprennent des paramètres de navigation d'un point de début de navigation et d'un point de fin de navigation, et le module de détermination (112) comprend :
un premier sous-module de calcul (131) configuré pour calculer une route de navigation basée sur le point de début de navigation et le point de fin de navigation ;
un sous-module d'interrogation (132) configuré pour interroger une vidéo de navigation comprenant la route de navigation ;
un sous-module d'extraction (133) configuré pour extraire une vidéo de navigation correspondant à la route de navigation de la vidéo de navigation comprenant la route de navigation, et déterminer la vidéo de navigation correspondant à la route de navigation en tant que vidéo de navigation correspondant aux informations de demande de navigation,
**caractérisé en ce que** les informations de demande de navigation comprennent en outre au moins un des paramètres de navigation suivants : un nom de région, un nom de route, une saison, un état météorologique, une vitesse de conduite moyenne et une distance de conduite, le module de détermination (112) comprenant en outre :
un second sous-module d'obtention (151) configuré pour, dans le cas l'interrogation produit au moins deux vidéos de navigations correspondant au point de début de navigation et au point de fin de navigation, obtenir les paramètres de navigation des vidéos de navigation ;
un second sous-module de calcul (152) configuré pour calculer des degrés de correspondance des paramètres de navigation des informations de demande de navigation relativement aux paramètres de navigation des vidéos de navigation ;
le sous-module de détermination (122) étant configuré pour déterminer une vidéo de navigation dont le degré de correspondance est le plus élevé en tant que vidéo de navigation correspondant aux informations de demande, ou déterminer des vidéos de navigation dont le degré de correspondance est supérieur à un seuil prédéfini en tant que vidéos de navigation correspondant aux informations de demande de navigation, ou déterminer un nombre prédéterminé de vidéos de navigation dont les degrés de correspondance sont relativement élevés en tant que vidéos de navigation correspondant aux informations de demande de navigation, dans lequel
quand il est déterminé qu'une pluralité de vidéos de navigation correspond aux informations de demande de navigation, l'utilisateur peut sélectionner n'importe laquelle de la pluralité de vidéos de navigation en vue de sa lecture.

6. Dispositif selon la revendication 5, dans lequel le module de navigation (113) est configuré pour envoyer la vidéo de navigation à un terminal en vue de sa lecture quand le dispositif est appliqué à un réseau.

7. Dispositif selon la revendication 5, dans lequel le module de navigation (113) est configuré pour lire la vidéo de navigation quand le dispositif est appliqué à un terminal, et
le module de navigation (113) comprend :
un sous-module d'affichage (161) configuré pour, quand au moins deux vidéos de navigation correspondant aux informations de demande de navigation sont déterminées, agencer et afficher les vidéos de navigation correspondant aux informations de demande de navigation ;
un sous-module de réception (162) configuré pour recevoir une opération de sélection d'une des vidéos de navigation par un utilisateur ;
un sous-module de lecture (163) configuré pour lire la vidéo de navigation sélectionnée ;
ou le module de navigation (113) comprend :
un sous-module d'obtention (171) configuré pour obtenir une vitesse de conduite actuelle
un sous-module de détermination (172) configuré pour déterminer une vitesse de lecture de la vidéo de navigation sur la base de la vitesse de conduite actuelle ;
un sous-module de lecture (173) configuré pour lire la vidéo de navigation à la vitesse de lecture.

8. Dispositif selon la revendication 5, comprenant en outre :
un module de synchronisation (114) configuré pour télécharger des données de navigation à partir d'un réseau quand le dispositif est appliqué à un terminal, les données de navigation comprenant une vidéo ;
un module de mémorisation (115) configuré pour mémoriser les données de navigation dans une base de données de navigation locale ;
dans lequel le module de détermination (112) est configuré pour interroger la vidéo de navigation correspondant aux informations de demande de navigation à partir de la base de données de navigation locale.
